# EUROPEAN PATENT APPLICATION

(11) **EP 0 644 498 A2**
(43) Date of publication of application: **22.03.1995**
(21) Application number: 94306815.5
(22) Date of filing: 19.09.1994
(51) Int. Cl.: G06F 17/50, G21D 1/00

(54) **Method and system for determining weld prep locations for a replacement component**

(30) Priority: 21.09.1993 US 125087
(71) Applicant: WESTINGHOUSE ELECTRIC CORPORATION, Pittsburgh Pennsylvania 15222 (US)
(72) Inventor: Kreitman, Paul Joseph, Green Oaks, Illinois 60048 (US)
(74) Representative: van Berlyn, Ronald Gilbert

(57) **Abstract**

A method for determining the location of weld preparations for a replacement component of a piping system. The method includes the use of a tracking laser interferometer to obtain measurements of the existing piping system as well as of the replacement component, and the use of the interferometer to generate a corresponding data file. The data file is downloaded to a CAD system which facilitates the identification of weld prep locations which result in minimizing the amount of machining required while maximizing the resulting pipe wall thickness. The tracking laser interferometer is also used to position the machining equipment on the nozzles and pipe ends. This method provides for rapid response to field changes, such as unexpected pipe movements or machining errors, and it provides the plant owner with a high level of assurance that the replacement component will fit properly, prior to any actual machining operations or heavy lifts.

## Description

### BACKGROUND OF THE INVENTION

The replacement of components such as tanks and heat exchangers in existing piping systems is commonplace in many industries. When the component is small and the working environment is benign, the fit of the replacement component can be accomplished by trial and error after the removal of the retired component from the system. However, when the component is large and/or the working environment is hazardous, it is important for the replacement component to fit into place without significant error.

One of the more difficult component replacement tasks accomplished to date is the replacement of the steam generators in a nuclear power plant. Not only are the components involved massive and the working spaces cramped, but also the work area and existing components are highly radioactive. It is important to be able to prepare the weld preps on the replacement steam generator nozzles and the reactor coolant system pipe ends with precision so that there are no component handling or fit-up problems during the replacement process.

Mechanical templates have been used successfully on steam generator replacement projects. This method involves the construction of a mechanical template which represents the replacement steam generator. The template is then moved into position after the retired steam generator is removed from the plant, and it is used to mechanically determine the desired location of the weld preps. This method has many disadvantages, including the cost of the mechanical template, and the time and radiation exposure required to move the template into position. Furthermore, difficulties with the fit-up are not identified until after the retired steam generator is removed. With this type of system, the equipment used to machine the weld prep is typically positioned by measuring the position of the equipment in relation to a series of marks made of the nozzle or pipe.

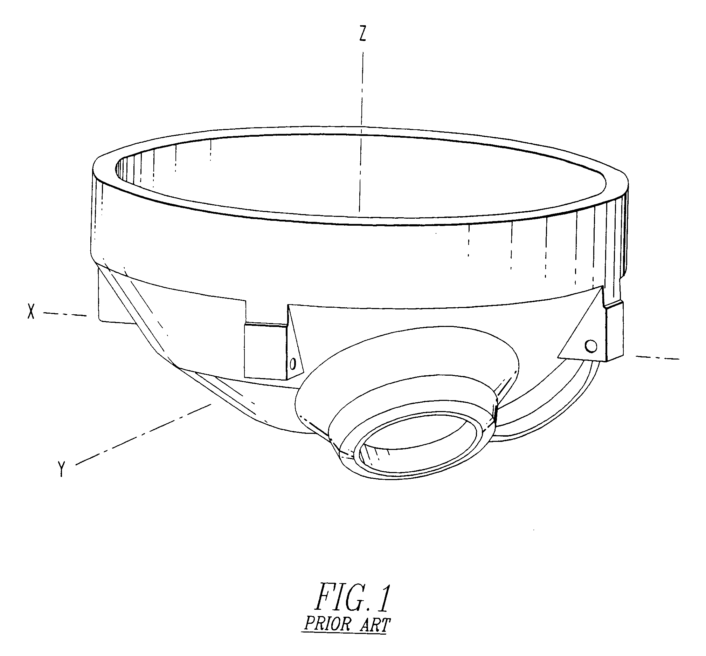

Computer aided design (CAD) software is known in the art and has been used to model steam generators for a variety of purposes. Figure 1 is a CAD generated model of the channel head portion of a typical nuclear steam generator, showing the inlet and outlet nozzles and three support pad locations.

To obtain the as-built dimensions of the existing piping and the replacement steam generators, it is known to use theodolites. These optical instruments require an operator at each of two instruments, which for a nuclear application is within the radioactive environment. However, the use of the theodolite alone does not provide the speed, flexibility, and level of owner confidence desired by the applicant in providing optimal support for a field installation project.

### SUMMARY

In light of the limitations of the prior art, it is an object of this invention to provide a method and system for determining the locations of weld preps for replacement components which minimizes exposure of personnel to the environment of the piping system, which provides precise and repeatable measurements, which is fast and flexible in response to unexpected field conditions such as the movement of the pipe ends when the retired component is removed, and which can provide a high level of assurance to the plant owner that the replacement component can be successfully fit into the existing piping system. Accordingly, a method is described having the steps of using a tracking laser interferometer to generate a first data file corresponding to the locations of the pipe ends in relation to the support locations of the existing piping system; obtaining wall thickness data for the pipe ends; using an interferometer to generate a second data file corresponding to the geometry of the replacement component; using a CAD system to model the piping system and replacement component on the basis of the first data file, the second data file, and the wall thickness data; using the CAD model to determine desired locations of weld preps on the replacement component nozzles and the pipe ends; using the CAD model to generate a third data file corresponding to the desired weld prep locations; using an interferometer to position machining equipment in accordance with the third data file to accomplish weld preps in the desired locations.

### BRIEF DESCRIPTION OF THE DRAWINGS

Figure 1 is a prior art computer aided drawing of a steam generator channel head.

Figure 2 is a flow chart illustrating a process of determining the location of weld preps for a replacement steam generator in accordance with this invention.

### DETAILED DESCRIPTION OF THE INVENTION

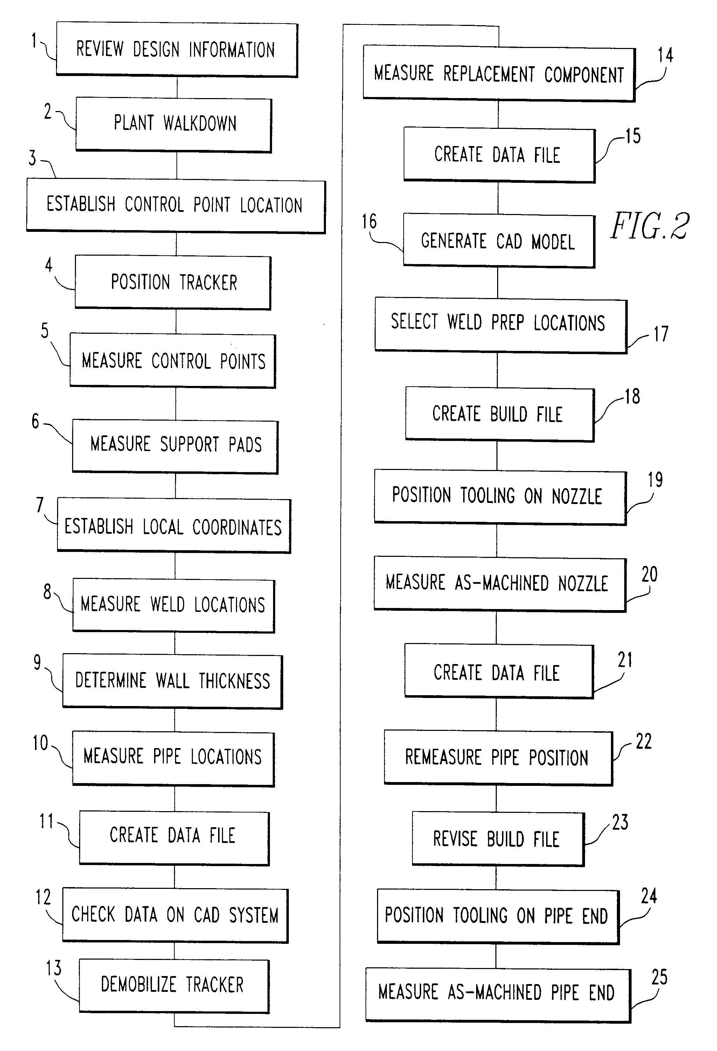

A method and system of determining the locations of weld preps for a replacement steam generator for a pressurized water reactor nuclear power plant is described herein as a preferred embodiment of this invention. Figure 2 illustrates the steps of this method in the form of a flow chart.

The first step in any plant maintenance project is to obtain and review the existing design information 1, including the as-built component and piping drawings. Normally, this information will be incomplete or of uncertain accuracy, however, it provides a good starting point for determining possible locations for positioning a measuring instrument, for establishing permanent control point locations to be used for baselining a coordinate system, and for determining the extent of insulation which will have to be removed. Drawing review facilitates preplanning of an actual plant walk-down 2 in order to minimize the time spent in the radiation zone. An actual plant walk-down should include general area photography and specific photography of important features taken from the viewpoint of proposed tracker locations. Specialized tooling and project specific procedures can then be designed and developed prior to the actual measurement and replacement activities in the radiation zone.

During an outage preceding the steam generator replacement outage, actual plant measurements are conducted. In accordance with this invention, a means for measuring is desired which can limit the number of operators which must work in a high radiation zone, and which can provide an output in a format which can be directly inputted to a CAD system. Theodolites have the required output capability, but they necessitate two operators and two stations to be set up near the component to be measured. A better instrument is a recently developed theodolite which incorporates an infrared ranging system, thereby eliminating one of the two operators. Proper operation of this instrument depends on the optical acuity of the operator. A preferred instrument for these measurements is a tracking laser interferometer. Tracking laser interferometers are known in the art, including the CMS-3000 Portable 3-D Laser Coordinate Measuring System produced by Chesapeake Laser Systems, Inc. of Kennett Square, Pennsylvania. Such systems use the accuracy of laser interferometry with the flexibility of automated servo tracking. This instrument gathers target position information in a 3D spherical coordinate system. In this format, the range to the target is measured with a helium-neon laser interferometer which is locked onto the target's optical center by a servo feedback system. The servo motors drive the interferometer's steering optics to keep in step with the target motion. This enables the interferometer to keep a continuous return beam from the target for an uninterrupted fringe count which determines the target range within the resolution of a wavelength of red light (.6238 microns). The angular information is monitored by rotary encoders which are affixed to each servo axis for azimuth and elevation position in arc second resolution. The output information may be converted to rectangular X,Y,Z format in any user defined coordinate system.

The use of a tracking laser interferometer necessitates that a minimum of three control points be established 3 in the vicinity of the steam generator channel head. These control points are established by permanently mounting retroreflectors to stationary structures, such as plant walls or structural steel which will not move during the entire steam generator replacement effort. The retroreflectors are typically mounted in nests which can take a variety of forms. The method of attachment of the nests to the permanent structures is planned prior to entering the radiation zone. It is important that the control points can be measured from all planned laser tracker locations so that the tracker can be reoriented each time it is moved. It is therefore preferable to establish as many as six control points, in the event that an unforeseen obstruction blocks the tracker's view of one or more of the control points at any time during the project.

The tracker portion of the laser interferometer is set up and calibrated 4 after the reactor coolant system piping and steam generator have cooled to a predetermined temperature range. The control points are then measured 5 with the tracker to establish a baseline global coordinate system.

The steam generator support pads are then measured 6. The measurement process with a tracking laser interferometer can be accomplished by one person by simply carrying a small retroreflector from a known calibration position on the tracker to the point to be measured. The tracker's servo mechanism can follow movements of the retroreflector of up to six meters per second. The operator must take care to maintain a line of sight between the tracker and the retroreflector so that the laser light beam is uninterrupted. If the tracker needs to be relocated for line of sight access to all support pads, the coordinate system can be reestablished by remeasuring at least three of the control points. Once the support pads are measured, a local coordinate system can be established 7 by aligning the X-Y plane with the bottom surface of the support pads, and by placing the origin at the intersection of the pad centerlines, as illustrated in Figure 1.

The hotleg and coldleg pipe-to-nozzle weld locations are then established by measuring a plurality of points around the weld centerlines 8. It is preferable to measure additional points in the pipe end area on either side of the weld centerline. These points may typically be located 1-2 inches on either side of those points measured on the centerline. These additional points make it possible to model this area as a cylinder, rather than as a circle, using known surface fitting software. The use of a cylindrical model eliminates the potential problem of having one measurement which is located off of the weld centerline causing a large offset in the curve defined by the software. It is also preferable if the points measured correspond to points used for ultrasonic measurement of the wall thickness. Such wall thickness measurements may be available from previous in-service inspections, or they can be obtained at this point in the process 9.

The final measurements which should be obtained at this stage are a plurality of points on the hotleg and coldleg piping 10. These points are selected to monitor possible pipe movement after the retired steam generator is removed.

The data obtained by the laser interferometer is then converted to a file format which can be downloaded to a CAD system via floppy disk or other media 11. For example, the data can be converted to an AutoCAD DXF (Data eXchange Format) for use with AutoCAD software supplied by Autodesk, Inc. of Sausalito, California. It is preferable to upload the data to a CAD system located on site while the tracker system is still set up in the radiation zone. The data can quickly be checked 12 for gross errors or data loss. Once the operator is satisfied that the data is viable, the tracker equipment can be removed from the radiation zone 13, thereby eliminating the possibility of additional setup and teardown of the equipment.

The dimensions of the replacement steam generator are also loaded into the CAD software. These dimensions may be based on shop as-built drawings, however, supplementary measurements may be obtained as necessary 14. The tracking laser interferometer is used to obtain as-built dimensions for the replacement steam generator in a manner similar to that described above. The interferometer is set up in the vicinity of the replacement steam generator in a location outside of the radiation zone, such as the on-site storage location or the manufacturing plant. Again, a minimum of three control locations are established to provide orientation of the tracker whenever it must be moved. The support pads are then measured and a local coordinate system is established as illustrated in Figure 1. The nozzles are then measured, and a data file is created 15 for loading into the CAD system.

The next step in this process is the analysis of the measurement data to identify preferred weld prep locations. This is done by using the CAD software to generate a model of the existing steam generator and piping system 16, and then superimposing a model of the replacement steam generator. A 3D surface mesh is first generated based on the grid measurements of the nozzle/pipe weld area. A second mesh is generated based on the wall thickness measurements in the same area. The CAD software is then used to solidify the volume bounded by these two meshes to create a representative model of the pipe end.

By superimposing the replacement steam generator model onto the model of the pipe ends and generator support locations, the optimum location for the new weld end preparations can be established 17. The CAD software makes it easy to evaluate alternative weld prep locations. The criteria for such an evaluation is to have a minimum amount of material removed by the weld prep machining, while maintaining a maximum wall thickness in the pipe. Planar fit, centerline fit and wall thickness are considered together. The freedoms of movement are plant dependent, but typically include a limited amount of horizontal rotation, as well as placing shims under the support pads. As the replacement steam generator model is moved to alternative positions, the CAD software will provide the interference volume which represents the amount of material to be removed during the machining process. The software may also be interrogated to determine the wall thickness. By combining the speed and accuracy of the interferometer measurements with the flexibility and economy of CAD software, an improved method of identifying desirable weld prep locations is achieved. Once the desired weld prep locations are identified, the CAD software is used to generate a "build" data file containing the coordinates of the weld preps 18. The build data file is then used with a tracking laser interferometer to position the machining equipment used to machine the weld preps.

At this point in the procedure, the owner of the plant has a very high level of confidence that the replacement steam generators can be successfully fit into the piping system, with a very low probability of surprises during the replacement process. Furthermore, if difficulties during the fit-up are predicted, such as the need to add metal in order to maintain the minimum wall thickness, this additional work can be planned for, and can be accounted for in the replacement outage schedule in advance of the plant shutdown. Because there is a high level of confidence that a proper fit-up can be obtained, the machining of the replacement steam generators can take place prior to the removal of the retired generators. Time permitting, it is more conservative to await final confirmation of the pipe position after generator removal before beginning the machining of the replacement nozzle weld preparations. In either case, the interferometer is set up in the vicinity of the replacement steam generators in a location outside of the radiation zone. Again, a minimum of three control locations are established to provide orientation of the tracker whenever it is moved. The support pads are then measured and a local coordinate system is established as shown in Figure 1. As a final check before machining operations begin, specific points on the hotleg and coldleg nozzle bores and faces may be measured to confirm that sufficient material exists to machine the weld preps at the desired locations. The machining equipment is then positioned on the nozzle in a predetermined location relative to the steam generator support pads by using the laser interferometer 19. Again, a retroreflector is used to align the machine equipment, allowing for precise and rapid confirmation of the equipment position by means of a digital readout of location available in real time from the interferometer. This digital readout is compared to the predetermined values included in the build file. Machine tool alignment can be checked at any time during the machining process. After completion of the machining process, final inspection of the weld prep geometry can be performed with the interferometer to confirm the as-machined dimensions 20. This data may be converted to a data file 21 and downloaded to the CAD system. After checking the data for gross errors, data loss, etc., the interferometer equipment can be removed from the job site.

After the retired steam generator is removed from the plant, the position of the piping can be checked with the interferometer by reference to the permanently mounted control points 22. The procedure for these measurements is the same as used to establish the baseline measurements; i.e. the interferometer is oriented by measuring the permanently mounted control points, then the previously measured pipe locations are remeasured. If the piping has moved, the revised position data can quickly be loaded into the CAD system, which is preferably available at the plant site, revised models generated, revised weld prep locations determined based on the same criteria as originally used, and a revised build file generated to reflect the new weld prep locations 23.

Once the retired steam generator is removed, the replacement generator nozzles prepared, the final position of the pipe ends verified, and a final build file generated, machining of the pipe ends can be performed with confidence. The machining equipment is positioned on the pipe ends by using the laser interferometer in accordance with the predetermined build file data 24. After machining of the weld preps, final as-machined data is obtained with the interferometer 25. Prior to demobilizing the tracker and machining equipment, the as-machined data is loaded into the on-site CAD system, and final confirmation of proper fit-up is made. At this point, prior to the heavy lift operations, the plant owner has an almost absolute assurance of proper fit-up of the replacement steam generator.

The embodiment of this invention described herein is not intended as a limitation of the invention, but rather as an illustration. The full scope of the invention is as claimed below.

## Claims

1. A method for determining the locations of weld preps when replacing a retired component with a replacement component in an existing piping system, said retired and replacement components each having a plurality of nozzles with weld preps and a plurality of support locations, and said piping system having a plurality of pipe ends with weld preps corresponding to the nozzles of said components, said method comprising the steps of:
using a tracking laser interferometer to generate a first data file corresponding to the locations of said pipe ends in relation to said support locations;
obtaining wall thickness data for said pipe ends at a plurality of locations;
using said interferometer to generate a second data file corresponding to the geometry of said replacement component;
using a CAD system to model said piping system and said replacement component on the basis of said first data file, said second data file, and said wall thickness data;
using said CAD model to determine desired locations of weld preps on said replacement component nozzles and said pipe ends;
using said CAD model to generate a third data file corresponding to said desired weld prep locations;
using said interferometer to position machining equipment in accordance with said third data file to accomplish weld preps in the desired locations.

2. The method of claim 1, wherein the step of using a tracking laser interferometer to generate a first data file is accomplished prior to the removal of said retired component from said piping system, and further comprising the steps of:
using said interferometer to measure the locations of said pipe ends after the removal of said retired component from said piping system;
revising said first data file as required to correspond to the locations of said pipe ends after removal of said retired component;
revising said third data file as required in response to any revision of said first data file.

3. The method of claim 1, further comprising the steps of:
using said interferometer to measure the as-machined dimensions of said replacement component nozzles and to revise said second data file prior to the machining of said pipe ends;
revising said CAD model according to said revised second data file;
revise the desired locations of weld preps on said pipe ends in response to said revised CAD model;
revise said third data file as required to reflect the revised desired locations of weld preps on said pipe ends.

4. The method of claim 1, wherein said wall thickness data corresponds to points on said pipe ends measured in the step of generating said first data file.

5. The method of claim 1, wherein the step of using said CAD model to determine desired locations of weld preps includes the step of comparing alternative weld prep locations by considering the amount of metal to be removed by the weld prep machining and the wall thickness of the pipe.

6. A method for determining the locations of weld preps when replacing a retired steam generator with a replacement steam generator in an existing radioactive piping system, said retired and replacement steam generators each having a plurality of nozzles with weld preps and a plurality of support locations, and said piping system having a plurality of pipe ends with weld preps corresponding to the nozzles of said components, said method comprising the steps of:
using a tracking laser interferometer to generate a first data file corresponding to the locations of said pipe ends in relation to said support locations prior to the removal of said retired steam generator from said piping system;
obtaining wall thickness data for said pipe ends at a plurality of locations corresponding to the locations of points measured with said tracking laser interferometer;
using said interferometer to generate a second data file corresponding to the geometry of said replacement steam generator;
using a CAD system to model said piping system and said replacement steam generator on the basis of said first data file, said second data file, and said wall thickness data;
using said CAD model to determine desired locations of weld preps on said replacement steam generator nozzles and said pipe ends;
using said CAD model to generate a third data file corresponding to said desired weld prep locations;
using said interferometer to position machining equipment on the nozzles of said replacement steam generator in accordance with said third data file prior to moving said replacement steam generator into said radioactive piping system;
using said interferometer to position machining equipment on said pipe ends in accordance with said third data file;
revising said CAD model to reflect the as-machined dimensions of said replacement steam generator and said pipe ends to confirm a proper fit prior to moving said replacement steam generator into said radioactive piping system.
